## Europäisches Patentamt
## European Patent Office
## Office européen des brevets

(19)

(11) Veröffentlichungsnummer: **0 222 044**
**B1**

(12) # EUROPÄISCHE PATENTSCHRIFT

(45) Veröffentlichungstag der Patentschrift:
08.03.89

(21) Anmeldenummer: 85116565.4

(22) Anmeldetag: 24.12.85

(51) Int. Cl.⁴: **F 27 B 7/20,** F 27 D 13/00, C 04 B 7/43

(54) Verfahren und Vorrichtung zur thermischen Behandlung von mehlförmigen Rohmaterialien.

(30) Priorität: 31.10.85 DE 3538707

(43) Veröffentlichungstag der Anmeldung:
20.05.87 Patentblatt 87/21

(45) Bekanntmachung des Hinweises auf die Patenterteilung:
08.03.89 Patentblatt 89/10

(84) Benannte Vertragsstaaten:
AT BE CH DE FR GB IT LI LU NL SE

(56) Entgegenhaltungen:
GB-A-2 081 855
US-A-4 392 822

ZEMENT-KALK-GIPS, Band 34, Nr. 8, August 1981, Seiten 395-402, Wiesbaden-Biebrich, DE; H. HERCHENBACH: "Beitrag zur verfahrenstechnischen Auslegung von Calcinatoren für Zement-Rohmehl"

(73) Patentinhaber: Klöckner- Humboldt- Deutz Aktiengesellschaft, Deutz- Mülheimer- Strasse 111 Postfach 80 05 09, D-5000 Köln 80 (DE)

(72) Erfinder: Wolter, Albrecht, Dr., Bismarckstrasse 40, D-5000 Köln 1 (DE)
Erfinder: Herchenbach, Horst, Sonnenweg 6, D-5202 Hennef 1 (DE)

(74) Vertreter: Beisner, Klaus, Dipl.- Ing., c/o KHD Humboldt Wedag AG Patente und Lizenzen Wiersbergstrasse Postfach 91 04 57, D-5000 Köln 91 (DE)

EP 0 222 044 B1

## Beschreibung

Die Erfindung betrifft ein Verfahren zur thermischen Behandlung mehlförmiger Rohmaterialien, vorzugsweise bei der Herstellung von Zementklinker aus Rohmehl, wobei das Rohmehl in einem Brennprozeß durch Vorwärmen, Kalzinieren, Sintern und Kühlen thermisch behandelt wird und wobei der Abgasstrom der Sinterstufe und der Abluftstrom der Kühlstufe aus dem Klinkerkühler gemeinsam zur Kalzination und Vorwärmung genutzt werden, sowie eine Anlage zur Durchführung des Verfahrens.

Alkalien, beispielsweise enthalten in den Salzen KCl, $K_2SO_4$ oder $Na_2SO_4$, haben nicht nur einen oft unerwünschten Einfluß auf die Qualität des Zements, sie behindern auch durch ihre Inhibitionswirkung in erheblichem Maße den Ablauf der Kalzination und zwar vornehmlich durch Behinderung des Ausbrandes der in die Kalzinationsstufe eingebrachten Brennstoffe.

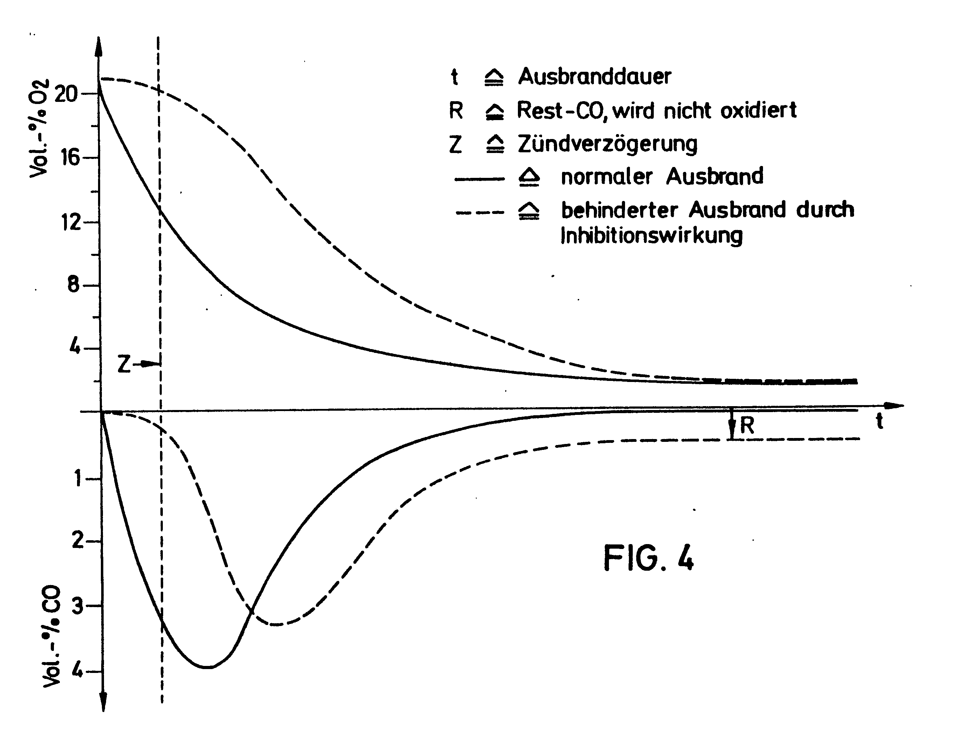

Einen Eindruck davon vermitteln die in Fig. 4 dargestellten Ausbrandkurven, die mit Hilfe eines Kohlenstaubbrenners experimentell ermittelt wurden. Dazu wurde Kohlenstaub in ein beheiztes Rohr eingeblasen. Die ausgezogenen Kurven zeigen den Ausbrand und den CO-Gehalt in normaler Atmosphäre, die unterbrochenen Kurven den Ausbrand und den CO-Gehalt in mit Alkalidämpfen beladener Atmosphäre. Deutlich ist die Zündverzögerung sowie die Beeinträchtigung des Restausbrandes zu erkennen.

Bei der Zementklinkerherstellung ist der sogenannte Alkalikreislauf bekannt. Die in der Sinterstufe aufgrund der hohen Temperaturen verdampften Alkalien werden mit dem Abgasstrom aus dem Ofen ausgetragen und lagern sich durch Kondensation an das kältere, bereits Alkalien enthaltene Rohmehl an, das im Gegenstrom zum Abgasstrom in den Ofen wandert. So reichern sich die Alkalien mit der Zeit immer mehr im Abgasstrom des Ofens an, weil die mit dem Rohmehl neu eingetragenen Alkalien teilweise verdampfen und sich zu den bereits im Gaskreislauf vorhandenen addieren. Die Folgen sind eine erforderliche höhere Temperatur in der Kalzinationsstufe für die gleiche Kalzinationsarbeit und ein erschwerter Ausbrand der in den Kalzinator, dem Reaktionsschacht, eingebrachten Brennstoffe. Das bedingt, bei gleicher Kalzinationsarbeit, einen erhöhten Brennstoffverbrauch und eine höhere Abgastemperatur.

Anlagen mit Kalzinatoren, bei denen reine Luft als Reaktionsgas eingesetzt wird, zeigen die oben genannten Erscheinungen nicht. Die Alkalien üben also eine erhebliche Inhibitionswirkung auf den Verbrennungsvorgang aus. Andererseits würde die Verwerfung der Ofenabgase beim Kalzinationsprozeß einen bedeutenden Verlust in der Wärmebilanz bewirken.

Bei herkömmlichen Anlagen, bei denen Abluft aus dem Kühler und Abgas aus dem Drehrohrofen gemeinsam zur Kalzination des Rohmehls genutzt werden, wurde bisher eine möglichst schnelle und vollständige Mischung der beiden Gasströme miteinander angestrebt. Das begünstigt aber die Inhibitionswirkung der Alkalien.

Aus der DE-OS-3 333 705 sind ein Verfahren und eine Anlage zur Herstellung von an Schadstoffen armen, insbesondere alkaliarmen, Zementklinker bekannt. Nach diesem Verfahren wird das vorgewärmte Rohmehl in zwei Teilströme aufgeteilt, von denen ein Teilstrom im Abgasstrom des Drehrohrofens kalziniert wird und der andere im Abluftstrom des Klinkerkühlers, bevor beide Ströme gemeinsam in den Abscheidezyklon der Kalzinationsstufe geführt werden. Dieses Verfahren ist aber nur vorteilhaft, wenn ein variabler Anteil (0 bis 100 %) des Ofenabgases in einen Bypass am Abluftstrom des Klinkerkühlers vorbeigeleitet werden soll.

Aufgabe dieser Erfindung ist es, die Inhibitionswirkung der verdampfenden Alkalien auf den Ausbrand der in die Kalzinationsstufe eingebrachten Brennstoffe weitestgehend zu verhindern und dieses auch durch geringfügige bauliche Änderungen in den Anlagen zu ermöglichen, die einen Reaktionsschacht aufweisen, in den der Abgasstrom des Ofens und der Abluftstrom des Klinkerkühlers innig miteinander gemischt werden. Dadurch ist es auch möglich, Altanlagen kostengünstig auf das vorteilhafte Verfahren umzurüsten. Des weiteren soll der $NO_x$-Anteil im Ofenabgas spüroar gesenkt werden.

Die Lösung der Aufgabe erfolgt mit Hilfe der kennzeichnenden Merkmale des Anspruchs 1.

In vorteilhafter Weise wird mit Hilfe dieser Merkmale erreicht, daß beide Gasströme in ein und demselben Reaktionsschacht, dem Kalzinator, nebeneinander bestehen und damit über eine gewisse Strecke die Vorteile der ansonsten getrennten Abluft- und Abgasführung in eigenen Leitungen im Hinblick auf eine verminderte Alkalienanreicherung und die damit verbundene geringere Inhibitionswirkung genutzt werden können. Es können ohne apparativen Mehraufwand die Vorteile genutzt werden, die Anlagen aufweisen, in denen die Kalzination ausschließlich oder überwiegend in den Abluftstrom des Klinkerkühlers erfolgt und der Abgasstrom des Ofens nur zur Vorwärmung des Rohmehls genutzt wird. Die Verfahrensmerkmale schaffen außerdem die Voraussetzung für möglichst angepaßte Strömungsverhältnisse.

In einer Ausgestaltung des Verfahrens ist vorgesehen, daß die Parallelführung der beiden Gasströme in dem gesamten Reaktionsschacht, bis zum Zyklonabscheider der Kalzinationsstufe, erfolgt. Dazu ist erforderlich, daß etwaige Krümmungen des Reaktionsschachtes in der Ebene der Gasströmung liegen. Diese Parallelführung der Gasströme bis in den Zyklonabscheider hinein ist dann vorteilhaft, wenn die Inhibitionswirkung der Alkalien besonders beim Restausbrand des Brennstoffs auftritt und aus diesem Grund eine lange Strecke im Reaktionsschacht, im Kalzinator, für den Ausbrand erforderlich ist. Eine Parallelführung der beiden Gasströme braucht vorteilhaft nur bis zum ersten Krümmer des Reaktionsschachtes zu erfolgen, wenn die Inhibitionswirkung der Alkalien vorzugsweise zu Beginn des Ausbrandes des Brennstoffes auftritt. Bei diesem Ausführungsbeispiel tritt eine Mischung der beiden Gasströme beispielsweise dann ein, wenn der Reaktionsschacht in eine Richtung führt, die von der Ebene abweicht, in der die ursprüngliche Strömungsrichtung der beiden Gasströme beim Eintritt in den Reaktionschacht verläuft.

Zur Steuerung der Kalzinationstemperatur wird in vorteilhafter Weise in den Abluftstrom und/oder Abgasstrom, vor deren Mischung miteinander, Brennstoff eingegeben. Die Zugabe des Brennstoffs kann in fester, flüssiger oder gasförmiger Form erfolgen. Die Menge des Brennstoffs kann in den beiden Gasströmen so bemessen werden, daß im Hinblick auf den Alkaligehalt der Ofenabgase eine Inhibitionswirkung auf den Ausbrand des Brennstoffs weitestgehend vermieden wird. Durch die Menge und die Art des Brennstoffs kann auch in vorteilhafter Weise auf den Gehalt des $NO_x$ im Abgas Einfluß genommen werden.

Das Verfahren wird so durchgeführt, daß mindestens eine solche Menge Brennstoff in den Abgasstrom eingegeben wird, aber vorzugsweise mehr, so daß der Restsauerstoff vollständig verbraucht wird. Durch diese Verfahrensweise wird aufgrund der Abgastemperatur und des Angebots an Reduktionsmittel der $NO_x$-Gehalt im Abgas in vorteilhafter Weise wesentlich gesenkt.

Das erfindungsgemäße Verfahren sieht weiterhin vor, daß das aus dem Abscheidezyklon der Vorwärmstufe kommende Rohmehl jeweils dem Abgasstrom und/oder dem Abluftstrom, vor deren Mischung miteinander, aufgegeben wird. Die Teilung des Rohmehls in zwei Teilströme ermöglicht vorteilhaft eine gezielte Einflußnahme auf die Kalzinationsbedingungen. Die Inhibitionswirkung der Alkalien tritt zunächst nur im Abgasstrom des Drehrohrofens auf, so daß die gesamte Alkalibelastung des Rohmehls durch entsprechend gesteuerte Aufgabemengen in den jeweiligen Gasstrom beeinflußt werden kann. Dadurch können auch schwierige Brennstoffe wie beispielsweise Anthrazit und Petrolkoks im Abluftstrom der Kühlstufe gut verbrannt werden.

In einer Ausgestaltung des Verfahrens wird das aus dem Abscheidezyklon der Vorwärmstufe kommende Rohmehl an der Grenzfläche des Abgas- und Abluftstromes, vor deren Mischung miteinander, aufgegeben. Diese Form der Aufgabe ist dann vorteilhaft, wenn beispielsweise eine Dosierweiche und getrennte Zuleitungen zu den Aufgabestellen des Rohmehls in den Kalzinator, in den Reaktionsschacht, nicht möglich sind. Die Aufteilung des Rohmehls auf die beiden Gasströme kann durch Hilfsmittel wie beispielsweise verstellbare Pralleisten oder Leitbleche im Bereich der Aufgabestelle erfolgen.

Nachfolgend wird die Erfindung anhand von schematisch dargestellten Ausführungsbeispielen näher erläutert.

Fig. 1  zeigt eine schematische Darstellung einer Anlage zur Herstellung von Zementklinker mit einer Vorwärmstufe (1), Kalzinationsstufe (2), Sinterstufe (3) und Kühlstufe (4).

Fig. 2  zeigt die Zusammenführung von Abgasleitung (14) und Abluftleitung (15) zum Reaktionsschacht (Kalzinator) (20) und einen Teil desselben mit zwei getrennten Zuführleitungen (21', 21") zur Zuführung des Rohmehls.

Fig. 3  zeigt eine Abänderung der in Fig. 1 und Fig. 2 gezeigten Bauart des Reaktionsschachtes. Die Zuführleitung (21) zur Zuführung des Rohmehls endet auf der Grenzfläche zwischen den beiden Gasströmen.

Fig. 4  zeigt die bereits beschriebene Inhibitionswirkung der Alkalien auf den Brennstoffausbrand.

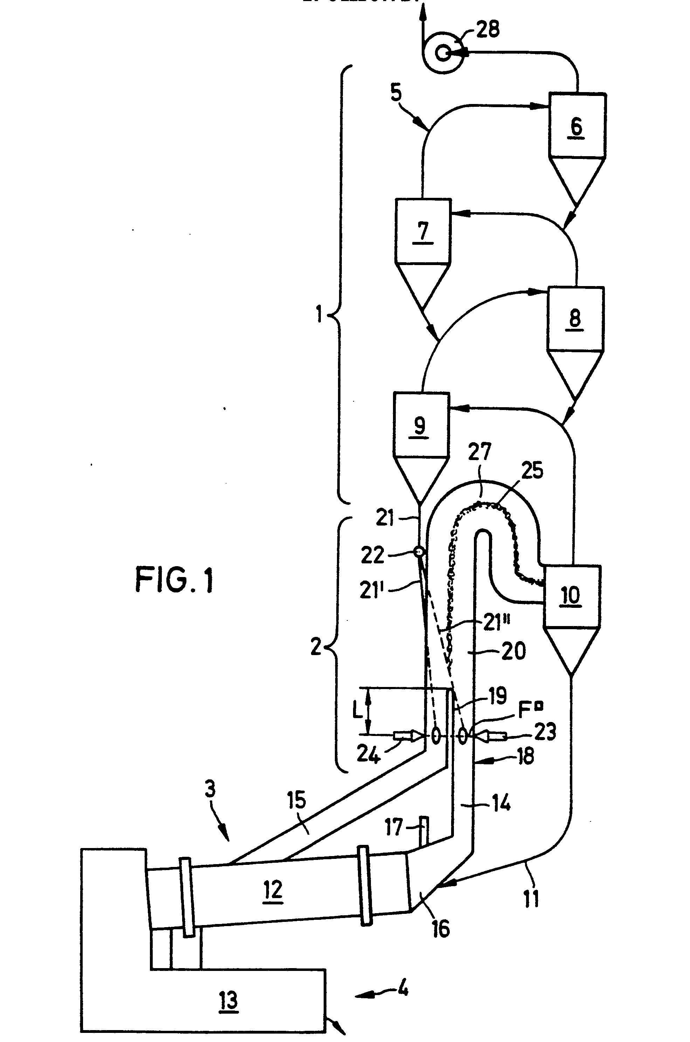

Fig. 1 zeigt in schematischer Darstellung eine Anlage zur Herstellung von Zementklinker. In die Vorwärmstufe 1 wird an der Stelle 5 in die Steigleitung zum obersten Wärmetauscherzyklon 6 das Rohmaterial aufgegeben. Es wandert im Gegenstrom zum erhitzenden Gas nacheinander durch die Wärmetauscherzyklone 7, 8 und 9 der Vorwärmstufe 1, um dann im Abscheidezyklon 9 aus dem Gasstrom ausgeschieden zu werden und durch die Zuführleitung 21 in der Dosierweiche 22 auf die beiden Zuführleitungen 21' und 21" aufgeteilt zu werden. Die Zuführleitungen 21' und 21" enden in der Kalzinationsstufe 2 im Reaktionsschacht 20.

Die Zuführleitungen enden im Reaktionsschacht 20, im Kalzinator, in dessen unterem Bereich, wo der Abgasstrom aus dem Drehrohrofen 12 und der Abluftstrom aus dem Klinkerkühler 13 noch durch eine Trennwand 19 voneinander getrennt werden.

Der Reaktionsschacht 20 wird durch die parallele oder nahezu parallele Zusammenführung der Abgasleitung 14 aus dem Drehrohrofen 12 und der Abluftleitung 15 aus dem Klinkerkühler 13 gebildet. Der Reaktionsschacht weist einen rechteckigen oder quadratischen Querschnitt auf, der der Summe der Querschnitte der beiden Leitungen an der Stelle ihrer Einmündungen 18 in den Reaktionsschacht 20 entspricht. Das Verhältnis der Seitenlängen reicht von 1 : 1 bis 1 : 10, liegt aber vorzugsweise im Bereich von 1 : 2 bis 1 : 4. Dazu müssen die Abgasleitung 14 und die Abluftleitung 15 ebenfalls einen rechteckigen oder quadratischen Querschnitt aufweisen. Die Abgasleitung 14 beginnt am Ofeneinlauf 16 der Sinterstufe 3, die Abluftleitung 15 kommt aus dem Klinkerkühler 13 der Kühlstufe 4. Die rechteckige oder quadratische Form ist deshalb erforderlich, daß die laminaren Strömungsverhältnisse, die in den beiden Leitungen 14 und 15 herrschen, nach ihrer Vereinigung möglichst lange nebeneinander bestehen bleiben, damit die gewünschten Kalzinationseffekte erfolgen und die Inhibitionswirkung der verdampften Alkalien auf den Ausbrand der Brennstoffe weitestgehend verhindert wird. Es muß sichergestellt sein, daß in den beiden Leitungen 14 und 15 die gleiche Gasgeschwindigkeit herrscht, weil sich sonst beide Gasströme unweigerlich schnellstens miteinander vermischen würden. Eine Regelung der Gasgeschwindigkeit könnte durch hier nicht dargestellte Organe in der Abgasleitung 14 oder Abluftleitung 15 vor deren Zusammenführung, erfolgen.

Der Brennstoff, in fester oder flüssiger Form, beispielsweise Kohlenstaub oder Öl, wird an der Stelle 23 in den Abgasstrom aus der Abgasleitung 14 und in diesem Beispiel an der Stelle 24 in den Abluftstrom aus dem Abluftleitung 15 aufgegeben, wo die Zuführleitungen 21' beziehungsweise 21" für das vorgewärmte Rohmehl einmünden.

Nach der Einmündung 18 der Abgasleitung 14 und der Abluftleitung 15 in den Reaktionsschacht 20, in dem das vorgewärmte Rohmohl kalziniert wird, trennt eine Trennwand 19 die beiden Gasströme voneinander. Sie reicht über die Einmündungen der Zuführleitungen 21' und 21" zur Zuführung des vorgewärmten Rohmehls hinaus. Ihre Länge soll so gewählt werden, daß durch die eingebrachten Brennstoffe der Restsauerstoffgehalt im Ofenabgas sicher verbraucht wird. Die Länge der Trennwand richtet sich nach den in dem Reaktionsschacht herrschenden Kalzinationsbedingungen. Die Länge L wird gemessen von dem Brenner 23 auf der Seite des Abgasstroms aus dem Drehrohrofen 12 bis zur Oberkannte der Trennwand 19. Sie richtet sich nach der Querschnittsfläche F des Reaktionsschachtes 20 an dieser Stelle und soll anhand folgender Gleichung berechnet werden:

L = 1/2 F bis L = 2 F.

Die Trennwand verhindert eine vorzeitige Vermischung der beiden Gasströme und dient zu deren Stabilisierung, vor allem deshalb, weil ihre Strömungsverhältnisse zunächst durch die Aufgabe von Brennstoff und Rohmehl gestört werden. Wenn sich aufgrund der Trennwand 19 die Strömungsverhältnisse wieder stabilisiert haben, bildet sich zunächst zwischen dem Abgas des Drehrohrofens 12 und der Abluft des Klinkerkühlers 13 eine Grenzschicht 25 aus, in der eine allmähliche Vermischung der beiden Gasströme stattfindet. Diese Vermischung kann selbst in Krümmungen 27 des Reaktionsschachtes 20 weitestgehend vermieden werden, wenn die Krümmung in der Ebene erfolgt, in der die Strömungslinien verlaufen. Ansonsten tritt eine sofortige Vermischung auf.

Die weitgehend laminaren Strömungsverhältnisse weisen den Vorteil auf, daß der Druckverlust in dem Reaktionsschacht gering ist. Eine sofortige, vollständige Mischung der beiden Gasströme miteinander führt zu hohen Druckverlusten.

Zum Zweck der Kühlung kann die Trennwand 19 doppelwandig ausgeführt sein. Dazu können ab dem Bereich der Einmündung 18 der Abgas- und der Abluftleitung, 14 beziehungsweise 15, die die Ausmauerung tragenden Wandungen mit Abstand voneinander angeordnet sein. Diese Wandungen können die weitergeführten Blechmäntel der Abgas- und Abluftleitung sein. In den Zwischenraum kann beispielsweise Luft als Kühlmittel eingeblasen werden. Denkbar ist auch eine Ausmauerung der Trennwand 19 aus hohlen feuerfesten Steinen, die von einem Kühlmedium durchströmt werden.

Bestehende Anlagen, die einen Reaktionsschacht zur Kalzination aufweisen, in dem Abgas des Ofens und Abluft des Klinkerkühlers innig vermischt werden, können leicht umgebaut werden, indem die Einleitung der Abluft geändert wird, so daß sie parallel zum Abgas einströmt. An der Einmündung ist zusätzlich nur noch eine entsprechend lange Trennwand erforderlich. Eine vollständige, scharfe Trennung der beiden Gasströme im Reaktionsschacht ist ein Idealzustand, der sich aufgrund der Feststoffbeladung durch das Rohmehl schwierig bewerkstelligen läßt. Die Vermischung der beiden Gasströme erfolgt aber in keinem Fall so schnell und so vollständig, wie es bei den herkömmlichen Anlagen der Fall ist und bisher erwünscht war. Im ungünstigsten Fall werden in der erfindungsgemäßen Anlage nach kurzer Wegstrecke im Reaktionsschacht 20 immer noch "Strähnen" der beiden Gasströme unvermischt nebeneinander bestehen.

Der Reaktionsschacht 20 mündet in den Abscheidezyklon 10, wo eine Vermischung der beiden Gasströme miteinander stattfindet und das kalzinierte Rohmehl abgeschieden wird. Das Rohmehl wird über die Leitung 11 in den Ofeneinlauf 16 der Sinterstufe 3 geführt, wo es zu Klinker gesintert wird. Der Klinker wird im Klinkerkühler 13 der Kühlstufe 4 mit Frischluft gekühlt, die als heiße Abluft in die Kalzinationsstufe 2 über die Abluftleitung 15 zugeführt wird. Das Abgas aus dem Ofen 12 und die Abluft durchströmen gemeinsam die Wärmetauscherzyklone 9, 8, 7 und 6, um dann von dem Gebläse 28 der hier nicht dargestellten Entstaubung zugeführt zu werden.

Zur Regulierung der Alkalibelastung der Ofenabgase weist die Anlage einen Teilgasabzug 17 in dem Ofenabgasstrang auf. Dadurch ist es vorteilhaft möglich, bei einem zu starken Anstieg des Alkaligehalts einen Teil der Ofenabgase abzuziehen und nach entsprechender Reinigung zu verwerfen.

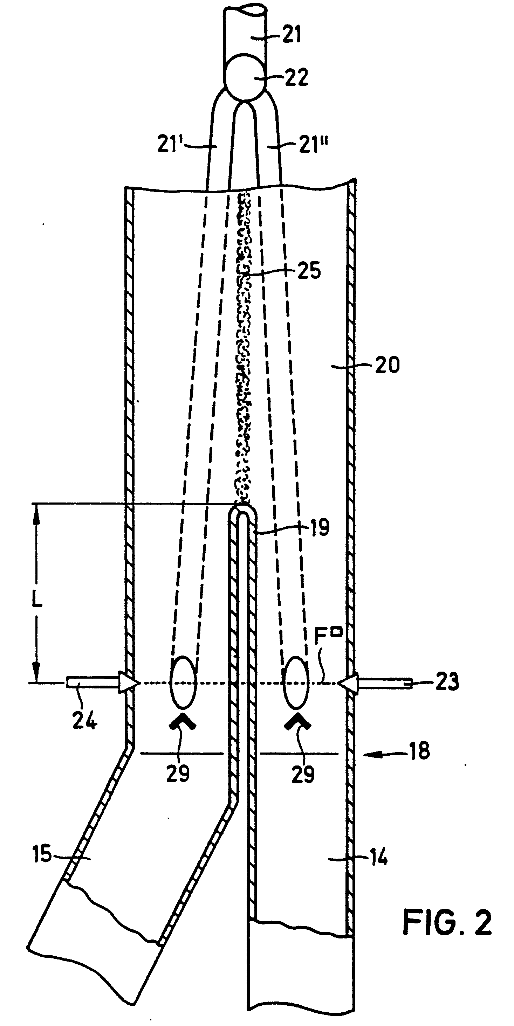

Fig. 2 zeigt schematisch den unteren Teil des Reaktionsschachtes 20 im Längsschnitt. Von rechts unten kommt die Abgasleitung 14 aus dem hier nicht dargestellten Ofeneinlauf, von links die Abluftleitung 15 aus der Kühlstufe. Die beiden Leitungen 14 und 15 münden parallellaufend an der Einmündung 18 in den Reaktionsschacht 20, dem Kalzinator für das erwärmte Rohmehl. Nach der Einmündung 18 verläuft zwischen den beiden Leitungen 14 und 15 noch eine Trennwand 19. Sie trennt die beiden Gasströme jeweils in den Teil voneinander, in dem die Brenner 23 beziehungsweise 24 angebracht sind und das vorgewärmte Rohmehl aufgegeben wird. Das Rohmehl fließt durch die Zuführleitung 21, von dem untersten Wärmetauscherzyklon der Vorwärmstufe kommend, durch die Dosierweiche 22 in die Zuführleitungen 21′ und 21″. Die Dosierweiche 22 erlaubt eine beliebige Aufteilung des Rohmehls auf die beiden Gasströme. Die Trennwand 19 sorgt dafür, daß nach Aufgabe des Rohmehls und nach dem Passieren der Brenner wieder stabile Strömungsverhältnisse in den beiden, durch eine Grenzschicht 25 voneinander getrennten Gasströmen eintreten.

In Abwandlung der gezeigten Bauart kann auch nur einem der Gasströme Brennstoff und/oder Rohmehl aufgegeben werden. Des weiteren sind auch pro Gasstrom zwei Aufgabestellen für das Rohmehl denkbar, die sich beispielsweise gegenüberliegen.

Die Trennwand 19 ist doppelwandig ausgeführt. Dazu sind die beiden Rohrleitungen der Abgasleitung 14 und der Abluftleitung 15 parallel mit Abstand voneinander über die Einmündung 18 hinaus weitergeführt, bis sie sich nach der Strecke L, gemessen von dem Brenner 23, vereinigen. Die Länge der Trennwand 19 berechnet sich nach der bekannten Formel aus der Querschnittsfläche F des Reaktionsschachtes 20 an dieser Stelle. In dem Hohlraum der Trennwand 19 kann die Kühlluft zirkulieren. Die Aufgabe des Rohmehls kann durch Verteilhilfen 29 auf den Gasstrom vergleichmäßigt werden.

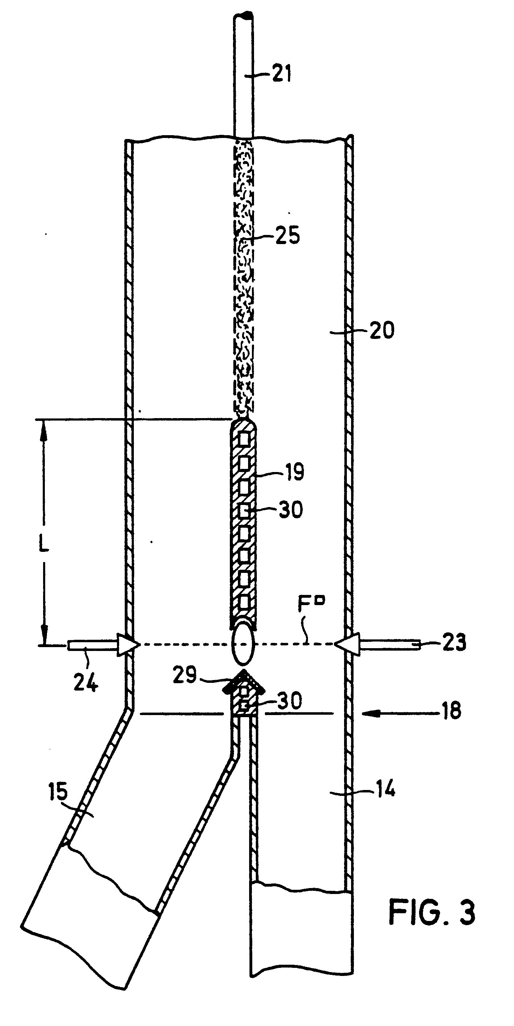

Fig. 3 zeigt eine Abänderung des in Fig. 1 und Fig. 2 gezeigten Reaktionsschachtes. Die Zufuhrleitung 21 des vorgewärmten Rohmehls aus der Vorwärmstufe 2 endet in der Trennwand 9, die hier eine Lücke aufweist. Die Aufgabe des Rohmehls erfolgt in der Ebene der Trennwand 9, auf der Grenzschicht 25 der beiden Gasströme. Auch bei dieser Bauart wird der Reaktionsschacht 20 durch die Zusammenführung der Abgasleitung 14 aus der Sinterstufe und der Abluftleitung 15 aus der Kühlstufe gebildet.

Von der Einmündung 18 der beiden Leitungen 14 und 15 erstreckt sich eine Trennwand 19 noch ein Stück in den Schacht. Die Trennwand 19 ist an einer Stelle unterbrochen. Hier mündet die Zuführleitung 21 für die Zuführung des Rohmehls, auf der Grenzfläche 25 zwischen den beiden Gasströmen. Auch hier richtet sich die Länge der Trennwand 19 nach der Querschnittsfläche F.

Durch Verteilhilfen 29, beispielsweise verstellbare Leitbleche, kann die Menge des Rohmehls auf die beiden Gasströme aufgeteilt werden. Das Rohmehl kann auch einseitig, nur in einen Schacht aufgegeben werden. Oberhalb der Aufgabestelle für das Rohmehl verläuft noch ein Stück der Trennwand 19, um die Strömungsverhältnisse nach der Aufgabe des Rohmehls zu stabilisieren.

Im vorliegenden Beispiel ist ein Brenner 23 auf der Seite des Abgasstroms und ein Brenner 24 auf der Seite des Abluftstromes installiert. Ihre Anordnung richtet sich nach den erforderlichen Kalzinationstemperaturen im Reaktionsschacht 20. Mit dem Brenner 23 kann der $NO_x$-Anteil im Abgas beeinflußt werden. Die Trennwand 19 besteht in diesem Beispiel aus einem Feuerfest-Mauerwerk. Durch die wabenförmigen Hohlräume 30 im Mauerwerk kann Kühlluft zirkulieren.

**Patentansprüche**

1. Verfahren zur thermischen Behandlung von mehlförmigen Rohmaterialien, vorzugsweise bei der Herstellung von Zementklinker aus Rohmehl, wobei das Rohmehl in einem Brennprozeß durch Vorwärmen, Kalzinieren, Sintern und Kühlen thermisch behandelt wird und wobei der Abgasstrom der Sinterstufe und der Abluftstrom der Kühlstufe aus dem Klinkerkühler gemeinsam zur Kalzination und Vorwärmung genutzt werden in dem der Abgasstrom der Sinterstufe und der Abluftstrom der Kühlstufe in einem gemeinsamen Reaktionsschacht zur Kalzination des Rohmehls geführt werden, wobei die Zusammenführung parallel oder nahezu parallel unter Beibehaltung der Querschnitte der beiden Gasströme und bei gleicher oder nahezu gleicher Gasgeschwindigkeit erfolgt, so daß nur an der Grenzschicht der beiden Gasströme eine partielle Mischung stattfindet.

2. Verfahren nach Anspruch 1, dadurch gekennzeichnet, daß die Parallelführung der beiden Gasströme in dem gesamten Reaktionsschacht, bis zum Zyklonabscheider der Kalzinationsstufe, erfolgt.

3. Verfahren nach Anspruch 1, dadurch gekennzeichnet, daß die Parallelführung der beiden Gasströme nur bis zum ersten Krümmer des Reaktionsschachtes erfolgt und danach eine Mischung miteinander eintritt.

4. Verfahren nach einem der Ansprüche 1 bis 3, dadurch gekennzeichnet, daß in den Abluftstrom und/oder Abgasstrom, vor deren Mischung miteinander, Brennstoff eingegeben wird.

5. Verfahren nach Anspruch 4 oder 5, dadurch gekennzeichnet, daß mindestens eine solche Menge Brennstoff in den Abgasstrom eingegeben wird, vorzugsweise mehr, so daß der Restsauerstoff vollständig verbraucht wird.

6. Verfahren nach einem der vorhergehenden Ansprüche, dadurch gekennzeichnet, daß das aus dem Abscheidezyklon der Vorwärmstufe kommende Rohmehl jeweils dem Abgasstrom und/ oder dem Abluftstrom, vor deren Mischung miteinander, aufgegeben wird.

7. Verfahren nach einem der vorhergehenden Ansprüche, dadurch gekennzeichnet, daß das aus dem Abscheidezyklon der Vorwärmstufe kommende Rohmehl an der Grenzfläche des Abgas- und Abluftstroms, vor deren Mischung miteinander, aufgegeben wird.

8. Vorrichtung zur Durchführung des Verfahrens nach Anspruch 1 in einer Anlage zur Herstellung von Zementklinker in einer mehrstufigen, aus hintereinander angeordneten Zyklonen bestehenden Vorwärmstufe, einem daran anschließenden Reaktionsschacht zur Kalzination, dem Kalzinator, sowie einem nachfolgenden Sinterofen, vorzugsweise einem Drehrohrofen, und Klinkerkühler, wobei eine Abluftleitung aus dem Klinkerkühler in den Reaktionsschacht mündet, dadurch gekennzeichnet, daß die Abluftleitung (15) aus dem Klinkerkühler (13) und die Abgasleitung (14) aus dem Drehrohrofen (12) parallel oder nahezu parallel zu dem Reaktionsschacht (20) zusammengeführt werden, der einen Querschnitt aufweist, der der Summe der Querschnitte der beiden Leitungen an der Stelle ihrer Einmündung (18) in den Reaktionsschacht (20) entspricht und diesen Querschnitt bis zum Abscheidezyklon (10), mindestens aber bis zum Krümmer (27), beibehält oder nahezu beibehält.

9. Vorrichtung nach Anspruch 8, dadurch gekennzeichnet, daß der Reaktionsschacht (20) einen rechteckigen Querschnitt aufweist mit einem Verhältnis der Seitenlängen von 1 : 1 bis 1 : 10, vorzugsweise von 1 : 2 bis 1 : 4.

10. Vorrichtung nach Anspruch 8 oder 9, dadurch gekennzeichnet, daß der Reaktionsschacht (20) mit mindestens einem Brenner (23, 24) ausgestattet ist.

11. Vorrichtung nach Anspruch 10, dadurch gekennzeichnet, daß der oder die Brenner (23, 24) an der Seite der Einmündung der Abgasleitung (14) und/oder an der Seite der Einmündung der Abluftleitung (15) angeordnet ist beziehungsweise sind.

12. Vorrichtung nach einem der vorhergehenden Ansprüche, dadurch gekennzeichnet, daß die Zuführleitungen (21', 21'') zur Aufgabe des Rohmehls aus dem Abscheidezyklon (9) der Vorwärmstufe (1) an der Seite der Einmündung der Abgasleitung (14) und/oder an der Seite der Einmündung der Abluftleitung (15) in den Reaktionsschacht (20) münden.

13. Vorrichtung nach einem der vorhergehenden Ansprüche, dadurch gekennzeichnet, daß die Zuführleitung (21) zur Zuführung des Rohmehls aus dem Abscheidezyklon (9) der Vorwärmstufe (1) an der Stelle in den Reaktionsschacht (20) mündet, wo die Grenzschicht (25) zwischen den beiden Gasströmen verläuft.

14. Vorrichtung nach einem der vorhergehenden Ansprüche, dadurch gekennzeichnet, daß der Reaktionsschacht (20) von der Einmündung (18) der Abgasleitung (14) und der Abluftleitung (15) ab eine Trennwand (19) aufweist.

15. Vorrichtung nach Anspruch 14, dadurch gekennzeichnet, daß die Trennwand (19), gemessen von dem Brenner (23) auf der Seite des Abgasstroms aus dem Drehrohrofen bis zur Oberkante der Trennwand eine Länge L aufweist, die sich aus der Querschnittsfläche F des Reaktionsschachtes (20) an dieser Stelle berechnet nach der Gleichung $L = 1/2\,F$ bis $L = 2\,F$.

16. Vorrichtung nach Anspruch 14 oder 15, dadurch gekennzeichnet, daß daß die Trennwand (19) doppelwandig ausgeführt ist und die beiden die Ausmauerung tragenden Wandungen zum Zwecke der Kühlung mit Abstand voneinander angeordnet sind.

17. Vorrichtung nach einem der vorhergehenden Ansprüche, dadurch gekennzeichnet, daß die Anlage einen Teilgasabzug (17) in dem Ofenabgasstrang aufweist.

## Claims

1. A method for the thermal treatment of raw materials in the form of meal, preferably during the production of cement clinker from raw meal, wherein the raw meal is thermally treated by preheating, calcining, sintering and cooling and wherein the stream of waste gas from the sintering stage and the stream of used air from the cooling stage of the clinker cooler are used jointly for the calcination and preheating in that the stream of waste gas from the sintering stage and the stream of used air from the cooling stage are conveyed into a common reaction shaft for the calcination of the raw meal, the bringing together being effected in parallel or almost in parallel while retaining the cross-sections of the two streams of gas and with the same or almost the same gas velocity so that a partial mixing takes place only at the interface of the two streams of gas.

2. A method according to Claim 1, characterised in that the parallel guiding of the two streams of gas is effected in the whole reaction shaft as far as the cyclone separator of the calcination stage.

3. A method according to Claim 1, characterised in that the parallel guiding of the two streams of gas is effected only as far as the first elbow of the reaction shaft and after that a mixing together occurs.

4. A method according to any one of Claims 1 to 3, characterised in that fuel is fed into the stream of used air and/or stream of waste gas, before they are mixed together.

5. A method according to claim 4 or 5, characterised in that at least such an amount of fuel, and preferably more, is fed into the stream of waste gas that the residual oxygen is completely used up.

6. A method according to any one of the preceding Claims, characterised in that the raw meal coming from the separating cyclone of the preheating stage is fed to the stream of waste gas and/or to the stream of used air before they are mixed together.

7. A method according to any one of the preceding Claims, characterised in that the raw meal coming from the separating cyclone of the preheating stage is fed in at the interface of the streams of waste gas and used air before they are mixed together.

8. An apparatus for carrying out the method according to Claim 1 in a plant for the production of cement clinker in a multi-stage preheating stage consisting of cyclones arranged one behind the other, a reaction shaft following thereon for the calcination, the calcinator, as well as a following sintering furnace, preferably a cylindrical rotary kiln, and clinker cooler, wherein a used-air conduit from the clinker cooler leads into the reaction shaft, characterised in that the used-air conduit (15) from the clinker cooler (13) and the waste-gas conduit (14) from the rotary kiln (12) are brought together parallel or almost parallel to the reaction shaft (20) which has a cross-section which corresponds to the sum of the cross-sections of the two conduits at the point (18) where they lead into the reaction shaft (20) and retains or almost retains this cross-section as far as the separating cyclone (10) but at least as far as the bend (27).

9. An apparatus according to Claim 8, characterised in that the reaction shaft (20) has a rectangular cross-section with a ratio of the side lengths of 1 : 1 to 1 : 10, preferably from 1 : 2 to 1: 4.

10. An apparatus according to Claim 8 or 9, characterised in that the reaction shaft (20) is equipped with at least one burner (23, 24).

11. An apparatus according to Claim 10, characterised in that the burner or burners (23, 24) is or are disposed at the side where the waste-gas conduit (14) enters and/or at the side where the used-air conduit (15) enters.

12. An apparatus according to any one of the preceding Claims, characterised in that the supply conduits (21', 21'') for feeding the raw meal from the separating cyclone (9) of the preheating stage (1) lead into the reaction shaft (20) at the side where the waste-gas conduit (14) enters and/or at the side where the used-air conduit (15) enters.

13. An apparatus according to any one of the preceding claims, characterised in that the supply conduit (21) for supplying the raw meal from the separating cyclone (9) of the preheating stage (1) leads into the reaction shaft (20) at the place where the interface (25) extends between the two streams of gas.

14. An apparatus according to any one of the preceding Claims, characterised in that the reaction shaft (20) comprises a partition (19) from the entry (18) of the waste-gas conduit (14) and the used-air conduit (15) onwards.

15. An apparatus according to Claim 14, characterised in that the partition (19), measured from the burner (23) at the side of the waste-gas stream from the rotary kiln to the upper edge of the partition, has a length L which is calculated from the cross-sectional area F of the reaction shaft (20) at this point in accordance with the equation L = 1/2 F to L = 2 F.

16. An apparatus according to Claim 14 or 15, characterised in that the partition (19) is of doublewalled construction and the two walls carrying the brick lining are arranged spaced apart for the purpose of cooling.

17. An apparatus according to any one of the preceding Claims, characterised in that the plant comprises an offtake (17) for some of the gas in the kiln waste-gas pipeline.

**Revendications**

1. Procédé pour le traitement thermique de matériaux bruts semblables à de la farine, de préférence dans la fabrication de clinker de ciment à partir de farine crue, procédé selon lequel la farine crue est traitée thermiquement par préchauffage, calcination, frittage et refroidissement dans un processus de cuisson et selon lequel le courant gazeux effluent de l'étage de frittage et le courant d'air effluent de l'étage de refroidissement, venant du refroidisseur de clinker, sont utilisés conjointement pour la calcination et le préchauffage, dans lequel on amène le courant gazeux effluent de l'étage de frittage et le courant d'air effluent de l'étage de refroidissement dans une cuve de réaction commune pour la calcination de la farine crue, en les réunissant, parallèlement ou à peu près parallèlement, avec préservation des sections droites des deux courants gazeux et à la même ou à peu près la même vitesse de gaz, de sorte qu'un mélange partiel a lieu seulement à la couche limite des deux courants gazeux.

2. Procédé selon la revendication 1, caractérisé en ce que l'on poursuit le guidage parallèle des deux courants gazeux dans toute la cuve de réaction, jusqu'au cyclone séparateur de l'étage de calcination.

3. Procédé selon la revendication 1, caractérisé en ce que l'on poursuit le guidage parallèle des deux courants gazeux seulement jusqu'au premier coude de la cuve de réaction, à la suite duquel s'opère un mélange des courants entre eux.

4. Procédé selon l'une des revendications 1 à 3, caractérisé en ce que l'on introduit du combustible dans le courant d'air effluent et/ou le courant gazeux effluent, avant leur mélange entre eux.

5. Procédé selon la revendication 3 ou 4, caractérisé en ce que l'on introduit le combustible dans le courant gazeux effluent avec un débit minimal qui assure la consommation complète de l'oxygène résiduel, le débit étant de préférence supérieur.

6. Procédé selon une des revendications précédentes, caractérisé en ce que l'on introduit la farine crue, venant du cyclone séparateur de l'étage de préchauffage, dans le courant gazeux effluent et/ou le courant d'air effluent, avant leur mélange entre eux.

7. Procédé selon une des revendications précédentes, caractérisé en ce que l'on introduit la farine crue, venant du cyclone séparateur de l'étage de préchauffage, sur l'interface du courant gazeux effluent et du courant d'air effluent, avant leur mélange entre eux.

8. Dispositif pour la mise en oeuvre du procédé selon la revendication 1, dans une installation pour la fabrication de clinker de ciment et plus particulièrement dans un étage de préchauffage constitué de cyclones montés en série et constituant plusieurs étapes, une cuve de réaction ou calcinateur qui s'y raccorde et sert à la calcination, ainsi qu'un four de frittage prévu à la suite, de préférence un four tubulaire rotatif, de même qu'un refroidisseur de clinker, l'installation comportant une conduite d'air effluent partant du refroidisseur de clinker et débouchant dans la cuve de réaction, caractérisé en ce que la conduite d'air effluent (15) venant du refroidisseur de clinker (13) et la conduite de gaz effluent (14) venant du four tubulaire rotatif (12), sont réunies parallèlement ou à peu près parallèlement pour former la cuve de réaction (20), laquelle présente une section droite correspondant à la somme des sections droites des deux conduites à l'endroit de leur embouchure (18) dans la cuve de réaction (20), la cuve conservant cette section ou à peu près, jusqu'au cyclone séparateur (10) ou tout au moins jusqu'à un coude (27).

9. Dispositif selon la revendication 8, caractérisé en ce que la cuve de réaction (20) possède une section droite rectangulaire avec un rapport des longueurs des côtés de 1 : 1 à 1 : 10, de préférence de 1 : 2 à 1 : 4.

10. Dispositif selon la revendication 8 ou 9, caractérisé en ce que la cuve de réaction (20) est équipée d'au moins un brûleur (23, 24).

11. Dispositif selon la revendication 10, caractérisé en ce que le ou les brûleurs (23, 24) est ou sont disposé(s) sur le côté de l'embouchure de la conduite de gaz effluent (14) et/ou sur le côté de l'embouchure de la conduite d'air effluent (15).

12. Dispositif selon une des revendications précédentes, caractérisé en ce que les conduites d'alimentation (21', 21'') pour l'introduction de la farine crue, venant du cyclone séparateur (9) de l'étage de préchauffage (1), débouchent sur le côté de l'embouchure de la conduite de gaz effluent (14) et/ou sur le côté de l'embouchure de la conduite d'air effluent (15) dans la cuve de réaction (20).

13. Dispositif selon une des revendications précédentes, caractérisé en ce que la conduite d'alimentation (21) pour l'amenée de la farine crue, venant du cyclone séparateur (9) de l'étage de préchauffage (1), débouche dans la cuve de réaction (20) à un endroit où passe la couche limite (25) entre les deux courants gazeux.

14. Dispositif selon une des revendications précédentes, caractérisé en ce que la cuve de réaction (20) contient une cloison (19) qui s'étend à partir de l'embouchure (18) de la conduite de gaz effluent (l4) et de la conduite d'air effluent (15).

15. Dispositif selon la revendication 14, caractérisé en ce que la cloison (19) possède une longueur L, mesurée à partir du brûleur (23) placé sur le côté du courant de gaz effluent venant du four tubulaire rotatif, jusqu'au bord supérieur de la cloison, qui est calculée, en se basant sur l'aire de la section droite F de la cuve de réaction (20) à cet endroit, selon l'équation $L = 1/2\,F$ à $L = 2\,F$.

16. Dispositif selon la revendication 14 ou 15, caractérisé en ce que la cloison (19) est à double paroi et les deux parois, portant le garnissage réfractaire, sont disposées à distance l'une de l'autre à des fins de refroidissement.

17. Dispositif selon une des revendications précédentes, caractérisé en ce que l'installation présente une extraction partielle de gaz (17) dans la canalisation d'évacuation des gaz effluents du four.

FIG. 1

FIG. 2

FIG. 3

FIG. 4